# EUROPÄISCHE PATENTSCHRIFT

(11) **EP 0 512 195 B1**
(45) Veröffentlichungstag und Bekanntmachung des Hinweises auf die Patenterteilung: **28.09.1994**
(21) Anmeldenummer: 92101309.0
(22) Anmeldetag: 28.01.1992
(51) Int. Cl.: F16F 13/00, F16F 3/08, B60K 5/12

(54) **Federumschaltbares Motorlager**
Engine mounting with adjustable elasticity level
Support de moteur avec ressort à caractéristique réglable

(30) Priorität: 07.05.1991 DE 4114879
(43) Veröffentlichungstag der Anmeldung: 11.11.1992
(73) Patentinhaber: Firma Carl Freudenberg, 69469 Weinheim (DE)
(72) Erfinder: Gärtner, Hanno, W-6940 Weinheim (DE); Hettler, Werner, W-6800 Mannheim 52 (DE); Simuttis, Arnold, Dr., W-6550 Bad Kreuznach (DE)

(56) Entgegenhaltungen:
- EP-A- 0 480 459
- DE-A- 3 403 002
- DE-A- 3 431 117
- FR-A- 2 272 857
- GB-A- 2 165 027
- PATENT ABSTRACTS OF JAPAN vol. 9, no. 191 (M-402)(1914) 7. August 1985
- PATENT ABSTRACTS OF JAPAN vol. 7, no. 1 (M-183)(1146) 6. Januar 1983

## Beschreibung

### Beschreibung für folgende Vertragsstaaten : DE, ES, FR, GB, IT

Die Erfindung betrifft ein federratenumschaltbares Motorlager, bestehend aus einem Traglager und einem Auflager, die quer zu einer Achse relativ beweglich angeordnet und durch ein erstes und ein zweites Federelement aus Gummi aufeinander abgestützt sind, wobei das zweite Federelement durch ein Hilfsmittel bedarfsweise blockierbar ist und wobei das erste und das zweite Federelement in Serie geschaltet und durch eine formbeständige Stützplatte voneinander getrennt sind.

Ein solches Lager ist aus der DE-A-3431 117 bekannt. Eine kontinuierliche Steuerung der Federeigenschaften des Lagers soll ermöglicht werden. Die Stützplatte, die als Ankerplatte ausgebildet ist, reicht bis über den Rand des glockenförmigen Auflagers und ist von diesem während der bestimmungsgemäßen Verwendung durch einen Spalt beabstandet. Nur in Ausnahmefällen, beispielsweise im Falle eines Defekts, berühren die Ankerplatte und das Auflager einander, so daß es sich als sinnvoll erwiesen hat, die Ankerplatte mit Gummi zu beschichten.

Aus der älteren Anmeldung EP-A-0 480 459 ist ein Lager bekannt, das bis auf das Merkmal, daß die Stützplatte aus Blech besteht, alle Merkmale des Anspruchs 1 beinhaltet. Bei diesem Lager ist zur Variation der Federsteifigkeit eines der beiden Federelemente durch ein hydraulisches Hilfsmittel bedarfsweise blockierbar ist. Gelangt das Lager als Motorlager zur Anwendung, besteht die Möglichkeit, das hydraulische Hilfsmittel in Abhängigkeit der Motordrehzahl der anschließenden Verbrennungskraftmaschine zu betätigen. Der erste der beiden Federkörper besteht aus einer zylindrischen Blockfeder, während der zweite Federkörper eine kreisringförmige Gestalt aufweist.

Ein weiteres Motorlager ist aus der DE-PS 34 03 002 bekannt. Danach beruht die Funktion des Motorlagers auf dem Zusammenwirken zweier Federelemente mit unterschiedlicher Federcharakteristik und einer Schaltkupplung. Die elektromagnetisch betätigbare Schaltkupplung ist mit dem relativ härteren Federelement in Reihe geschaltet und diese Einheit ist parallel zu dem relativ weicheren Federelement angeordnet. Bei unbetätigter Schaltkupplung werden höher frequente Schwingungen mit kleinen Amplituden von dem relativ weicheren Federelement isoliert. Bei betätigter Schaltkupplung ergibt sich eine zusammengesetzte Federcharakteristik aus den durch die Schaltkupplung verbundenen Federelementen.

Dabei ist allerdings zu beachten, daß die Federsteifigkeiten der beiden Federelemente durch ihre Parallelschaltung bei betätigter Schaltkupplung nicht zu stark voneinander abweichen dürfen, um einen annähernd gleichmäßigen Übergang zwischen den Federkennlinien zu erhalten. Die Gebrauchseigenschaften dieses Motorlagers sind aufgrund der relativ schmalbandigen Dämpfung wenig befriedigend. Nachteilig darüberhinaus ist der komplizierte innere Aufbau des Motorlagers, bestehend aus vielen zu befestigenden Einzelteilen.

Die Herstellbarkeit des Lagers ist in wirtschaftlicher Hinsicht wenig befriedigend. Auch die großen Abmessungen in axialer Richtung und das hohe Gewicht des montierten Motorlagers sind, konstruktionsbedingt, nachteilig.

Der Erfindung liegt die Aufgabe zugrunde, ein Motorlager der eingangs genannten Art derart weiterzuentwickeln, daß sich eine breitbandigere Schwingungsisolierung bzw. -dämpfung ergibt, das Lager einfach, bestehend aus vergleichsweise wenigen, unkomplizierten Teilen, wirtschaftlich herstellbar ist und gleichzeitig geringere Abmessungen und weniger Gewicht aufweist.

Diese Aufgabe wird erfindungsgemäß mit den kennzeichnenden Merkmalen von Anspruch 1 gelöst. Auf vorteilhafte Ausgestaltungen nehmen die Unteransprüche bezug.

Bei dem erfindungsgemäßen Motorlager ist es vorgesehen, daß die Stützplatte eine Anschlagfläche aufweist, daß die Anschlagfläche mit einer Gegenanschlagfläche des Auflagers durch das Hilfsmittel in Eingriff bringbar ist und daß die Stützplatte aus Blech besteht. Dieses Merkmal bewirkt eine ausgezeichnete Funktion des federratenumschaltbaren Motorlagers mit besonders breitbandiger Dämpfung und einfachem, teilearmen Aufbau. Höherfrequente Schwingungen mit geringen Amplituden werden in der Weise isoliert, daß das erste und das zweite Federelement ohne Betätigung des Hilfsmittels in Serie geschaltet sind und so eine relativ weiche Federcharakteristik aufweisen. Tieferfrequente Schwingungen mit größeren Amplituden, wie sie beispielsweise beim Überfahren von unebenen Straßen auftreten, werden dadurch gedämpft, daß das Hilfsmittel die relative Beweglichkeit des zweiten Federelementes verhindert.

Die Schwingungen werden durch das erste Federelement gedämpft, das, im Vergleich zu der relativ weichen Gesamtfedercharakteristik der in Reihe geschalteten Federelemente, eine härtere Einzelfedercharakteristik aufweist. Zur Anwendung gelangen, je nach konstruktiven Vorgaben, Federelemente mit gleichen oder unterschiedlichen Federkennlinien, so daß das Motorlager nahezu universell für alle Anwendungsfälle verwendbar ist. Dabei können die Anschlagfläche und die Gegenanschlagfläche mittels hydraulischer oder pneumatischer Hilfsmittel miteinander in Eingriff bringbar sein. Hierbei ist von Vorteil, daß das Lager in Abhängigkeit von den Besonderheiten des jeweiligen Anwendungsfalles verwendet werden kann. Für die Funktion des Lagers ist es im wesentlichen unerheblich, ob die Gegenanschlagfläche dem Auflager oder dem Traglager zugeordnet ist.

Dadurch, daß die Stützplatte aus Blech besteht, ist die Herstellung von vorteilhaften Formen, beispielsweise durch Tiefziehen, besonders einfach und kostengünstig. Darüberhinaus kann vorgesehen sein, daß die Stützplatte von zumindest einem Federelement vollständig umschlossen ist. Durch die vollständige Ummantelung der Stützplatte ergibt sich bei Betätigung des Hilfsmittels eine weiche und geräuschfreie Berührung von Anschlagfläche und Gegenanschlagfläche. Die Stützplatte kann beispielsweise in eines der Federelemente einvulkanisiert sein.

Die Mittel können zumindest eine Kolben- Zylindereinheit umfassen, die in dem Auflager und/oder der Stützplatte vorgesehen ist. Dabei kann die Kolben- Zylindereinheit eine Bewegungsachse aufweisen, die sich parallel zu der Achse des Motorlagers erstreckt. Vorteilhafter Weise besteht die Kolben- Zylindereinheit aus drei Zylindern, die hydraulisch betätigbar sind und gleichmäßig entlang einer Umfangslinie eines der Federelemente angeordnet sind. Ermittelt beispielsweise ein Wegaufnehmer Auslenkungen zwischen Traglager und Auflager, die einen bestimmten Schwellwert überschreiten, werden die Zylinder durch ein Signal betätigt und eines der Federelemente arretiert. Der Schwellwert kann beispielsweise in einem Kennfeld gespeichert oder in eine elektronische Motorsteuerung integriert sein, die signalleitend mit dem Wegaufnehmer verbunden ist. Eine hydraulische Betätigung der Zylinder bietet sich durch das im Motor ohnehin vorhandene Öl und eine hohe Betriebssicherheit des federratenumschaltbaren Motorlagers an. Drei Hydraulikzylinder, die gleichmäßig am Umfang eines der Federelemente angeordnet sind, ergeben eine gleichmäßige Belastung des arretierten Federelementes und verhindern darüberhinaus ein Verkanten der Federelemente im Gehäuse bei Betätigung des Hilfsmittels.

Bei einer alternativen Ausführungsform des erfindungsgemäßen Motorlagers kann das Hilfsmittel in das zweite Federelement integriert und dadurch gebildet sein, daß das zweite Federelement einen druckbeaufschlagbaren Hohlraum enthält und durch Einspeisung eines druckbeaufschlagten, strömungsfähigen Mediums in den Hohlraum ausdehnbar ist. Das zweite Federelement kann durch Einspeisung des druckbeaufschlagten Mediums in den Hohlraum parallel zu der Achse dehnbar sein, wobei das zweite Federelement im nichtdruckbeaufschlagten Zustand von der Anschlagfläche der Stützplatte einen radialen Abstand aufweist und erst durch eine radiale Ausdehnung unverrückbar mit der Anschlagfläche in Eingriff bringbar ist. Bei dem druckbeaufschlagbaren Medium kann es sich beispielsweise um Öl handeln. Zum Dämpfen von Schwingungen mit großen Amplituden wird so viel Öl in den Hohlraum eingebracht, daß sich der Innendruck erhöht, daß sich die Wandung in radialer Richtung ausbaucht und gegen die Stützplatte, die vom ersten Federelement umschlossen sein kann, abstützt. Die Gesamtfedercharakteristik wird dadurch härter und dämpft die großen Schwingungsamplituden. Zur Isolierung hochfrequenter Schwingungen ist es dagegen lediglich nötig, beispielsweise über ein Hydraulikventil, den relativen Überdruck aus dem Hohlraum entweichen zu lassen, um so für eine ausgezeichnete Schwingungsisolierung zu sorgen. Die Zuleitung des fließfähigen Mediums in den Hohlraum eines der Federelemente kann durch ein Befestigungselement gebildet sein, das eine Durchgangsbohrung zur Einspeisung des Mediums aufweist.

Gemäß einer weiteren, vorteilhaften Ausgestaltung, ist es vorgesehen, daß das Hilfsmittel durch einen selbstrückstellenden, elastischen Balg gebildet ist, der durch Einspeisung eines strömungsfähigen Mediums in einen umschlossenen Hohlraum ausdehnbar und an der Stützplatte und/oder der Gegenanschlagfläche festlegbar ist. Durch den selbstrückstellenden, elastischen Balg ist gewährleistet, daß die Federrate des Motorlagers innerhalb kürzester Zeit umschaltbar sind. Druckbeaufschlagbar ist der elastische Balg beispielsweise durch eine Öffnung im angrenzenden Trag- oder Auflager.

Gemäß einer vorteilhaften Ausgestaltung ist vorgesehen, daß die beiden Federelemente das Traglager und das Auflager zumindest teilweise einander übergreifend verbinden. In einer bevorzugten Ausführungsform ist das erste Federelement ringförmig gestaltet und weist einen Innendurchmesser auf, der größer ist, als der Außendurchmesser des zweiten Federelementes. Neben einer ringförmigen Gestalt des ersten Federelementes besteht auch die Möglichkeit, das erste Federelement aus säulenartigen Gummielementen zu bilden. Dadurch, daß die Federelemente zumindest teilweise einander übergreifend angeordnet sein können, ergeben sich geringe Abmessungen des federratenumschaltbaren Motorlagers in axialer Richtung.

Das erste und das zweite Federelement können an sich quer zu der Achse erstreckenden Haftflächen der Stützplatte und/oder des Trag- und Auflagers festgelegt sein. Hierbei ist von Vorteil, daß während der bestimmungsgemäßen Verwendung des Motorlagers innerhalb der Federelemente überwiegend Druck- und Zugspannungen auftreten und nicht Schubspannungen die die Gebrauchsdauer des Lagers vermindern könnten.

Der Gegenstand der Erfindung wird nachfolgend anhand der in der Anlage beigefügten Zeichnungen weiter verdeutlicht.

Es zeigen jeweils in geschnittener Darstellung:
Fig. 1 ein Motorlager bestehend aus einem Traglager und einem Auflager, die durch zwei Federelemente, die einstückig aneinander festgelegt sind, verbunden sind und drei Zylindern, die dem Traglager zugeordnet sind;
Fig. 2 ein Motorlager, ebenfalls bestehend aus einem Traglager und einem Auflager, die durch zwei einstückig ausgebildete Federelemente verbunden sind und einen im Zweiten Federelement angeordneten Hohlraum;
Fig. 3 unterscheidet sich von Fig. 2 durch einen Kolben, der durch einen Stellmotor in den Hohlraum einbringbar ist;
Fig. 4 ein Motorlager mit einer zusätzlichen Fluidkammer zur inneren Verspannung des Lagers und weiteren Verhärtung der Federcharakteristik;
Fig. 5 ein Motorlager mit einem selbstrückstellenden, elastischen Balg;
Fig. 6 ein Lager gemäß Fig. 5, jedoch mit geringeren Abmessungen in radialer Richtung;
Fig. 7 ein Motorlager, bei dem das erste und das zweite Federelement nahezu die gleichen Abmessungen in radialer Richtung aufweisen;
Fig. 8 ein Motorlager mit selbstrückstellendem, elastischem Balg, der an das angrenzende Federelement anlegbar ist, wodurch dieses nicht mit dem druckbeaufschlagbaren Medium in Berührung kommt.

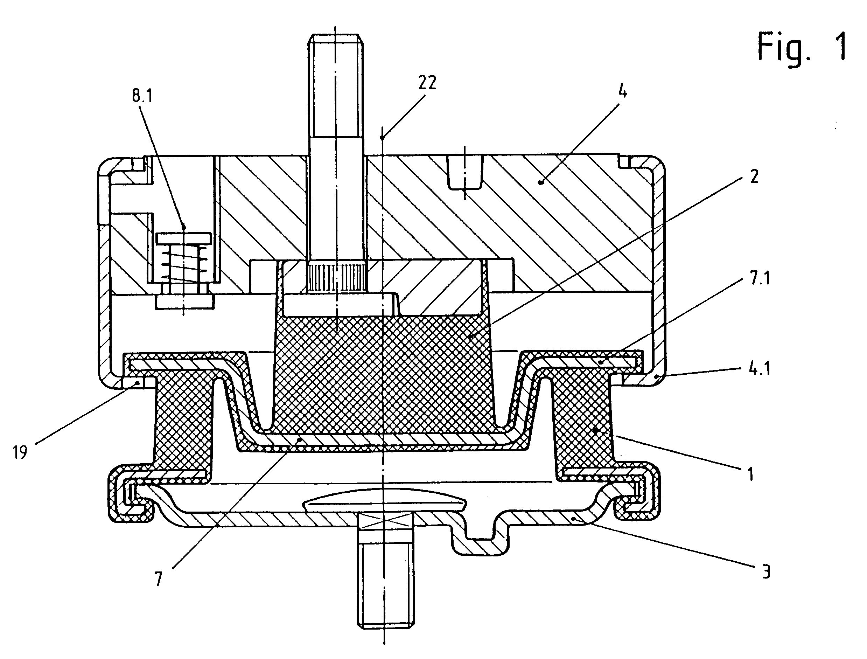

Das in Fig. 1 dargestellte Motorlager besteht im wesentlichen aus einem Traglager 3 und einem Auflager 4, die durch zwei Federelemente 1, 2, die einstückig aneinander festgelegt sind, miteinander verbunden sind. Das erste Federelement 1 umschließt das zweite Federelement 2 zumindest teilweise koaxial mit radialem Abstand. Im Hinblick auf eine größere Stabilität und eine längere Gebrauchsdauer sind die Federelemente 1, 2 beispielsweise durch eine topfförmige, formbeständige Stützplatte 7 aneinander festgelegt. Die topfförmige Gestalt ermöglicht kompakte Abmessungen in axialer Richtung. Die Stützplatte 7 ist von den Federelementen 1, 2 vollständig umschlossen, wodurch eine weiche und geräuschfreie Berührung mit drei hydraulisch betätigbaren Zylindern 8.1 und den Gegenanschlagflächen 4.1 erfolgt. Außerdem schützten die Gegenanschlagflächen 4.1 das Innere des Lagers, insbesondere das zweite Federelement 2 vor Verunreinigungen, die sich außerhalb des Lagers befinden, wodurch das Lager eine sehr hohe Gebrauchsdauer aufweist. Die Zylinder 8.1 sind gleichmäßig auf einer konzentrischen Kreisbahn zu den Federelementen 1, 2 angeordnet. Die beiden weiteren Zylinder sind in dieser Darstellung nicht zu sehen. Die Zylinder können nicht nur wie hier dargestellt, im Auflager 4 angeordnet sein, sondern auch im Traglager 3.

In der gezeigten Darstellung befindet sich das federraten umschaltbare Motorlager in nicht belastetem Zustand; die Anschlagfläche 7.1 liegt an der Gegenanschlagfläche 4.1 an. Im eingebauten Zustand, unter statischer Last, befindet sich die Anschlagfläche 7.1 der Federelemente 1, 2 ungefähr in der Mitte des durch das Auflager 4 und die Gegenanschlagfläche 4.1 begrenzten, ringförmigen Raumes. Zur Schwingungsdämpfung kleiner Amplituden sind die Federelemente 1, 2 in Reihen geschaltet, wodurch sich eine relativ weiche Gesamtfedercharakteristik ergibt. Beim Befahren von schlechten Straßen beispielsweise werden die Zylinder 8.1 betätigt und blockieren den Federweg des zweiten Federelementes 2, indem sie die Anschlagfläche 7.1 auf die Gegenanschlagfläche 4.1 drücken. Die im Vergleich zur Gesamtfedercharakteristik härtere Einzelfedercharakteristik des ersten Federelementes 1 dämpft dann die großen Schwingungsamplituden wirkungsvoll.

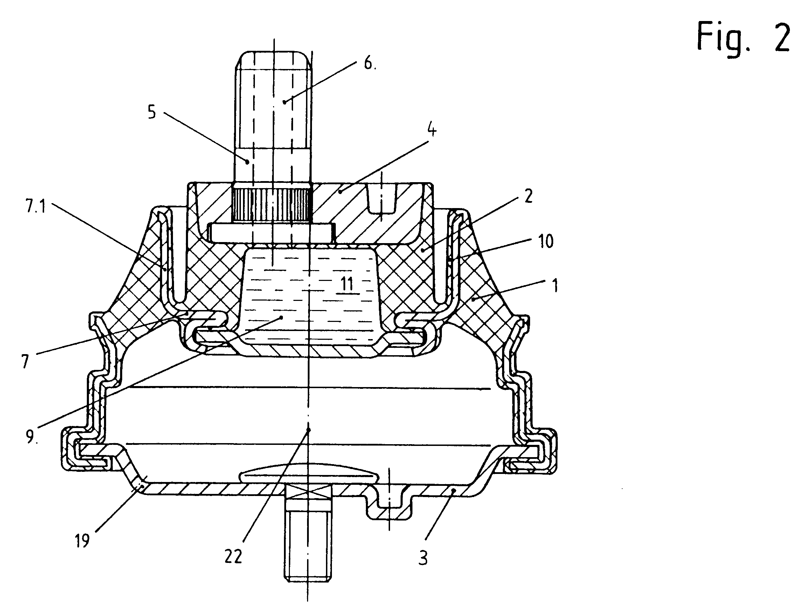

Die Fig. 2, 3 und 4 stellen eine alternative Ausführungsform des in Fig. 1 gezeigten Lagers dar. Das Funktionsprinzip ist jeweils ähnlich dem zuvor beschriebenen und beruht im wesentlichen auf dem Abkoppeln eines Federelementes - hier dem zweiten - beim Auftreten großer Schwingungsamplituden, um diese mit einer härteren Federcharakteristik zu dämpfen.

Das Motorlager in Fig. 2 besteht ebenfalls aus einem Traglager 3 und einem Auflager 4, die durch zwei einstückig ausgebildete Federelemente 1, 2 verbunden sind. Beim Befahren ebener Straßen werden die, im wesentlichen vom Motor erzeugten, vergleichsweise hochfrequenten Schwingungen mit kleinen Amplituden vom erfindungsgemäßen Lager, so wie es in der Zeichnung dargestellt ist, sehr gut isoliert. Große Schwingungsamplituden, wie sie beispielsweise beim Überfahren von Bordsteinkaten auftreten, werden in der Weise gedämpft, daß beispielsweise durch das Motorenaufnahmeelement 5, das gleichzeitig als Zuleitung 6 für das fließfähige Medium 9 ausgebildet ist, der Hohlraum 11 so lange mit Medium druckbeaufschlagt wird, bis sich die elastische Umfangswand des den Hohlraum 11 bildenden zweiten Federelementes 2 an der radial mit Abstand benachbarten Wand 10 des ersten Federelementes 1 anlegt. Diese Wand 10 ist zur Versteifung durch einen Einsatz armiert, der beispielsweise aus einem Blech bestehen kann und direkt an die Stützplatte 7 angeformt ist. Die Druckbeaufschlagung bewirkt eine deutliche Verhärtung der Federcharakteristik des Motorlagers sowohl in radialer, als auch in axialer Richtung.

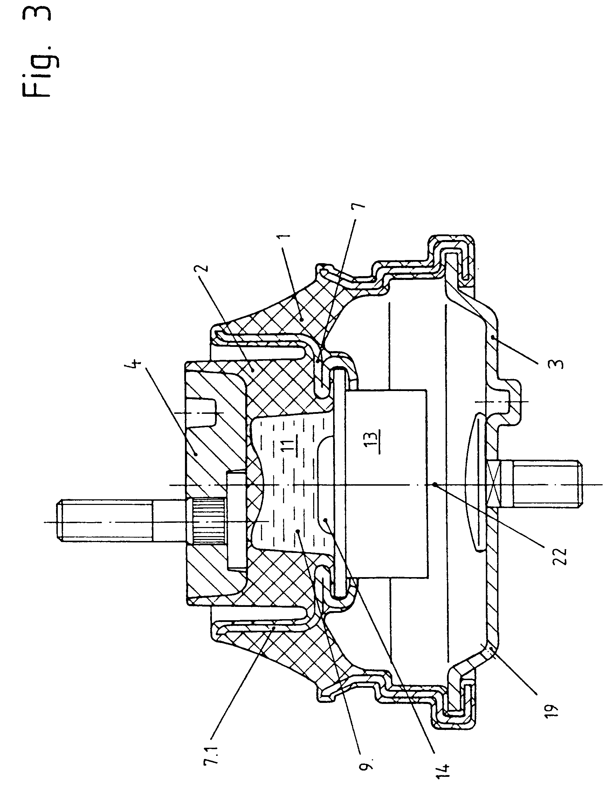

Fig. 3 zeigt ein Motorlager, bei dem die Wirkung des zweiten Federelementes 2 durch einen Kolben 14, der durch einen Stellmotor 13 in den Hohlraum 11 einbringbar ist, unterbunden wird. Beim Befahren ebener Straßen werden die auftretenden kleinen Schwingungsamplituden wie bei dem Motorlager von Fig. 2 ausgezeichnet isoliert. Große Schwingungsamplituden werden gedämpft, indem der Stellmotor 13 ein Signal erhält, daß die Relativbewegung zwischen Traglager 3 und Auflager 4 zu groß ist und den Kolben 14 betätigt. Durch die Inkompressibilität des fließfähigen Mediums 9 wölbt sich die Umfangswand des Hohlraums 11 bei betätigtem Kolben 14 nach außen aus, bis sie, wie auch in Fig. 2, am ersten Federelement 1 anliegt. Nun weist die Federcharakteristik des Lagers eine höhere Steifigkeit auf und niedrigfrequente Schwingungen werden gedämpft.

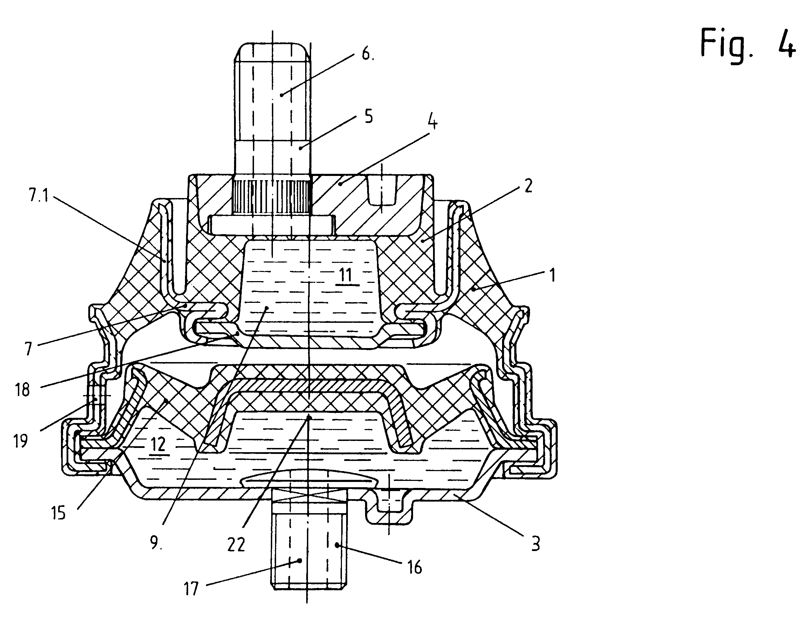

Fig. 4 zeigt ein Motorlager mit zusätzlicher Fluidkammer 12, die durch eine elastische Trennwand 15 und das Traglager 3 begrenzt ist. Das Motorenaufnahmeelement 5 und das Befestigungselement 16 des Lagers sind als Zuleitungen 6, 17 zum angrenzenden Hohlraum 11 und der angrenzenden Fluidkammer 12 vorgesehen. Die Isolierung höher frequenter Schwingungen erfolgt, wie unter den Fig. 1 bis 3 beschrieben. Große Schwingungsamplituden können bei diesem Lager zweistufig gedämpft werden. Bei Druckbeaufschlagung des Hohlraums 11 verhält sich das Lager wie in der Beschreibung zu Fig. 2 und 3. Reicht die Federsteifigkeit des ersten Federelementes 1 bei Blockierung des zweiten Federelementes 2 nicht aus, kann die zusätzliche Fluidkammer 12 druckbeaufschlagt werden. Dann bewegt sich die elastische Trennwand 15 axial in Richtung des benachbarten Deckels 18, der dem Hohlraum 11 zugeordnet ist und stützt sich gegen diesen ab. Dadurch wird eine weitere Verhärtung der Federcharakteristik in Verbindung mit einer besseren Dämpfung der großen Auslenkbewegungen sowohl in radialer als auch in axialer Richtung bewirkt.

Für eine einwandfreie Funktion der Federraten umschaltbaren Motorlager gemäß der Fig. 1 bis 4 muß eine Be- und Entlüftung 19 im Bereich des fluidungefüllten Raumes vorgesehen sein, beispielsweise in Form einer Bohrung .

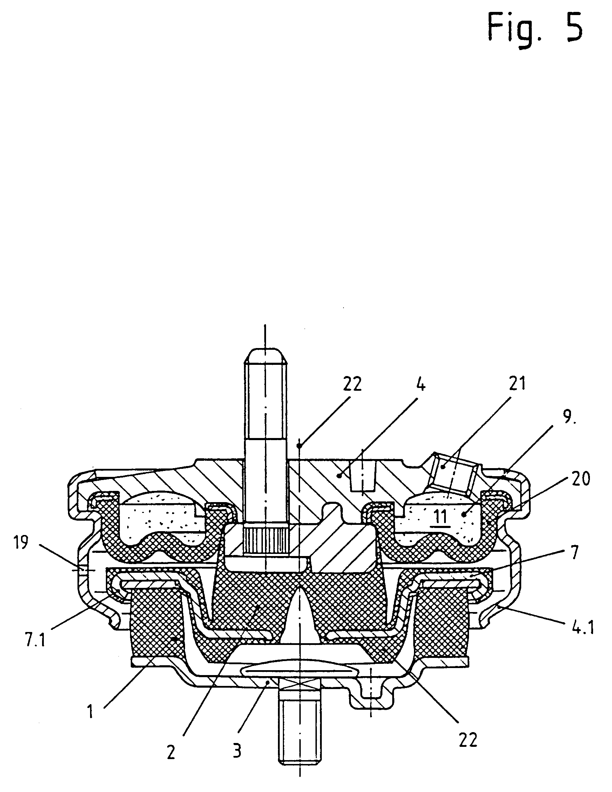

Fig. 5 zeigt ein Motorlager, dessen zweites Federelement 2 durch ein Hilfsmittel, das durch einen selbstrückstellenden elastischen Balg 20 gebildet ist, bei Druckbeaufschlagung des Balges blockierbar ist. Durch Einspeisung eines strömungsfähigen Mediums 9 in den von dem Balg 20 umschlossenen Hohlraum 11 dehnt sich der Balg 20 aus und legt die Stützplatte 7 mit ihrer Anschlagfläche 7.1 unverrückbar an der Gegenanschlagfläche 4.1 des Auflagers 4 an. Auf das in dieser Figur dargestellte Motorlager wirkt eine statische Last, wobei das zweite Federelement 2 nicht arretiert, sondern in Reihe zu dem ersten Federelement 1 geschaltet ist. Daraus ergibt sich eine vergleichsweise weiche Gesamtfedercharakteristik des Motorlager. Der Hohlraum 11 im elastischen Balg 20 wird bedarfsweise über die Öffnung 21 mit fließfähigem Medium 9 befüllt. Zur Begrenzung der Ausschläge des ersten Federelementes in axialer Richtung sind Anschlagpuffer 22 vorgesehen, die kreisringförmig gestaltet sein können oder gleichmäßig am Umfang verteilt sind. Neben geringeren mechanischen Belastungen auf das erste Federelement 1 bewirken die Anschlagpuffer 22 auch eine Verringerung des Geräusches während der bestimmungsgemäßen Verwedung des Motorlagers.

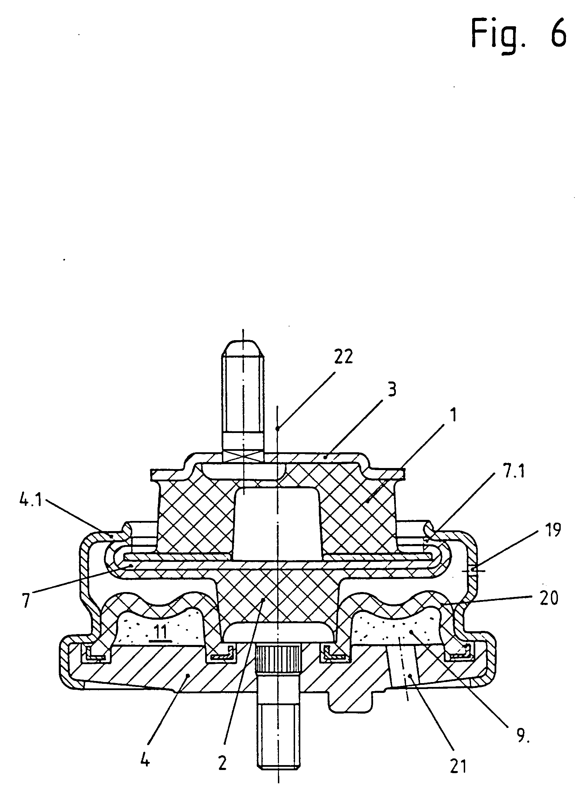

Die Fig. 6, 7 und 8 sind im unbelasteten Zustand dargestellt, wobei sich die Anschlagflächen 7.1 der Stützplatte 7 an der Gegenanschlagfläche 4.1 des Auflagers 4 abstützen, ohne daß die Hohlräume 11 mit Druck beaufschlagt sind.

In Fig. 6 ist ein Lager dargestellt, das ähnlich wie das Lager aus Fig. 5 gestaltet ist, aber aufgrund der unterschiedlichen geometrischen Abmessungen der beiden Federelemente 1, 2 geringere Abmessungen in radialer Richtung aufweist.

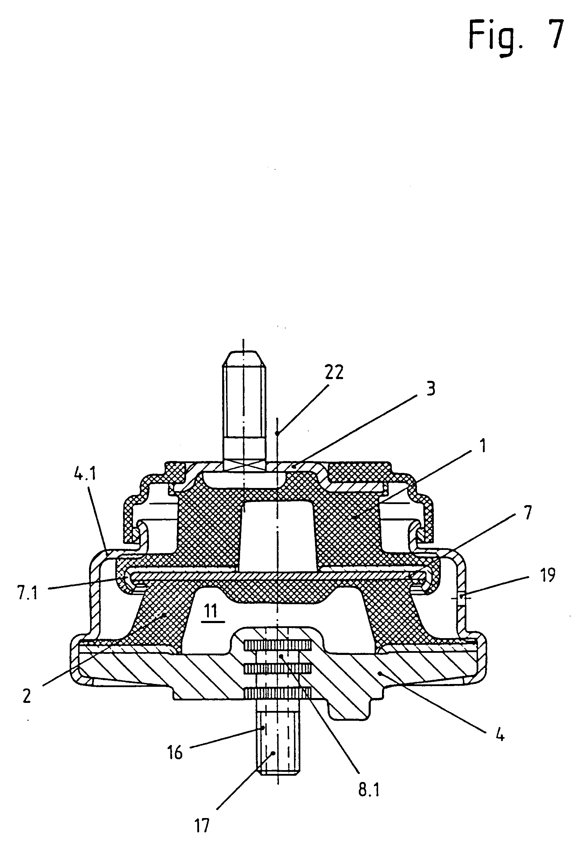

Das steuerbare Motorlager aus Fig. 7 weist ebenfalls vergleichsweise geringe Abmessungen in radialer Richtung auf. Das erste Federelement 1 und das zweite Federelement 2 sind an einer geradlinigen Stützplatte 7 festgelegt. Das Befestigungselement 16 ist mit einer Zuleitung 17 versehen durch die ein fließfähiges Medium in den an das Auflager angrenzenden Hohlraum 11 gelangen kann. Nach einer anderen, hier nicht dargestellten Ausgestaltung, kann es vorgesehen sein, daß im Befestigungselement ein in axialer Richtung beweglicher Kolben angeordnet ist, der das zweite Federelement 2 bedarfsweise dadurch blockiert, daß er die Anschlagfläche 7.1 der Stützplatte 7 unverrückbar an der Gegenanschlagfläche 4.1. des Auflagers 4 festlegt.

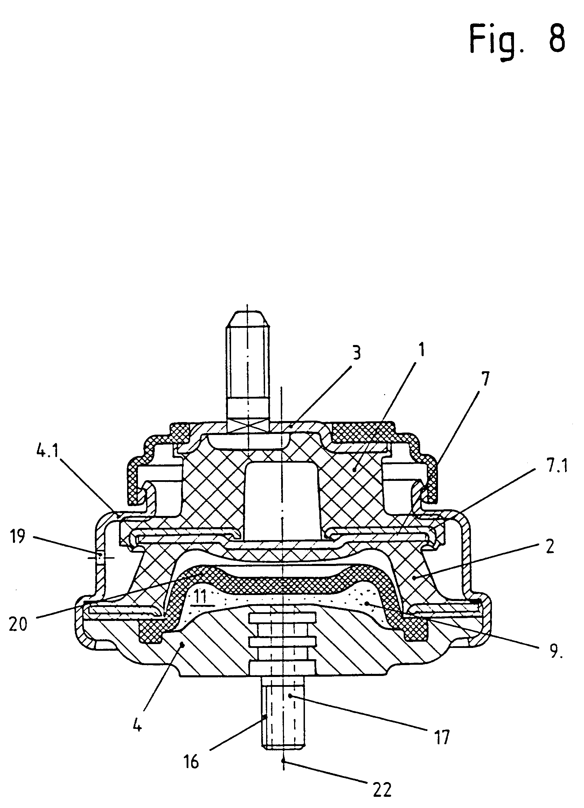

In Fig. 8 ist ein steuerbares Motorlager ähnlich dem Lager aus Fig. 7 dargestellt, wobei das zweite Federelement 2 nicht mit fließfähigem Medium 9 in Berührung kommt. Diese Ausgestaltung ist insbesondere dann sinnvoll, wenn es sich bei dem fließfähigen Medium um eine aggressive Flüssigkeit handelt, die das zweite Federelement zwei angreift und dadurch die Gebrauchsdauer des Lagers herabsetzt. Bei dem Balg 20 aus Fig. 8 handelt es sich wie auch bei den Bälgen in den Fig. 5 und 6 um ein selbstrückstellendes Element, das die Federeigenschaften des Motorlagers bei nicht-druckbeaufschlagtem Hohlraum nicht beeinflußt. Auch in diesem Fall ist das Befestigungselement 16 mit einer Zuleitung 17 versehen, durch die das fließfähige Medium 9 in den Hohlraum 11 eingespeist werden kann. Alternativ dazu wäre auch eine Zuleitung durch das Auflager 3 denkbar, wie beispielsweise in Fig. 5 dargestellt.

Die Motorlager nach den Fig. 1 bis 8 weisen ausgezeichnete Gebrauchseigenschaften bei geringen Abmessungen und wenig Gewicht auf und zeichnen sich durch sehr gute Gebrauchseigenschaften sowie wirtschaftliche Herstellbarkeit aus.

### Beschreibung für folgenden Vertragsstaat : SE

Die Erfindung betrifft ein federratenumschaltbares Motorlager, bestehend aus einem Traglager und einem Auflager, die quer zu einer Achse relativ beweglich angeordnet und durch ein erstes und ein zweites Federelement aus Gummi aufeinander abgestützt sind, wobei das zweite Federelement durch ein Hilfsmittel bedarfsweise blockierbar ist und wobei das erste und das zweite Federelement in Serie geschaltet und durch eine formbeständige Stützplatte voneinander getrennt sind.

Ein solches Lager ist aus der DE-A-3431 117 bekannt. Eine kontinuierliche Steuerung der Federeigenschaften des Lagers soll ermöglicht werden. Die Stützplatte, die als Ankerplatte ausgebildet ist, reicht bis über den Rand des glockenförmigen Auflagers und ist von diesem während der bestimmungsgemäßen Verwendung durch einen Spalt beabstandet. Nur in Ausnahmefällen, beispielsweise im Falle eines Defekts, berühren die Ankerplatte und das Auflager einander, so daß es sich als sinnvoll erwiesen hat, die Ankerplatte mit Gummi zu beschichten.

Ein weiteres Motorlager ist aus der DE-PS 34 03 002 bekannt. Danach beruht die Funktion des Motorlagers auf dem Zusammenwirken zweier Federelemente mit unterschiedlicher Federcharakteristik und einer Schaltkupplung. Die elektromagnetisch betätigbare Schaltkupplung ist mit dem relativ härteren Federelement in Reihe geschaltet und diese Einheit ist parallel zu dem relativ weicheren Federelement angeordnet. Bei unbetätigter Schaltkupplung werden höher frequente Schwingungen mit kleinen Amplituden von dem relativ weicheren Federelement isoliert. Bei betätigter Schaltkupplung ergibt sich eine zusammengesetzte Federcharakteristik aus den durch die Schaltkupplung verbundenen Federelementen.

Dabei ist allerdings zu beachten, daß die Federsteifigkeiten der beiden Federelemente durch ihre Parallelschaltung bei betätigter Schaltkupplung nicht zu stark voneinander abweichen dürfen, um einen annähernd gleichmäßigen Übergang zwischen den Federkennlinien zu erhalten. Die Gebrauchseigenschaften dieses Motorlagers sind aufgrund der relativ schmalbandigen Dämpfung wenig befriedigend. Nachteilig darüberhinaus ist der komplizierte innere Aufbau des Motorlagers, bestehend aus vielen zu befestigenden Einzelteilen.

Die Herstellbarkeit des Lagers ist in wirtschaftlicher Hinsicht wenig befriedigend. Auch die großen Abmessungen in axialer Richtung und das hohe Gewicht des montierten Motorlagers sind, konstruktionsbedingt, nachteilig.

Der Erfindung liegt die Aufgabe zugrunde, ein Motorlager der eingangs genannten Art derart weiterzuentwickeln, daß sich eine breitbandigere Schwingungsisolierung bzw. -dämpfung ergibt, das Lager einfach, bestehend aus vergleichsweise wenigen, unkomplizierten Teilen, wirtschaftlich herstellbar ist und gleichzeitig geringere Abmessungen und weniger Gewicht aufweist.

Diese Aufgabe wird erfindungsgemäß mit den kennzeichnenden Merkmalen von Anspruch 1 gelöst. Auf vorteilhafte Ausgestaltungen nehmen die Unteransprüche bezug.

Bei dem erfindungsgemäßen Motorlager ist es vorgesehen, daß die Stützplatte eine Anschlagfläche aufweist und daß die Anschlagfläche mit einer Gegenanschlagfläche des Auflagers durch das Hilfsmittel in Eingriff bringbar ist. Dieses Merkmal bewirkt eine ausgezeichnete Funktion des federratenumschaltbaren Motorlagers mit besonders breitbandiger Dämpfung und einfachem, teilearmen Aufbau. Höherfrequente Schwingungen mit geringen Amplituden werden in der Weise isoliert, daß das erste und das zweite Federelement ohne Betätigung des Hilfsmittels in Serie geschaltet sind und so eine relativ weiche Federcharakteristik aufweisen. Tieferfrequente Schwingungen mit größeren Amplituden, wie sie beispielsweise beim Überfahren von unebenen Straßen auftreten, werden dadurch gedämpft, daß das Hilfsmittel die relative Beweglichkeit des zweiten Federelementes verhindert.

Die Schwingungen werden durch das erste Federelement gedämpft, das, im Vergleich zu der relativ weichen Gesamtfedercharakteristik der in Reihe geschalteten Federelemente, eine härtere Einzelfedercharakteristik aufweist. Zur Anwendung gelangen, je nach konstruktiven Vorgaben, Federelemente mit gleichen oder unterschiedlichen Federkennlinien, so daß das Motorlager nahezu universell für alle Anwendungsfälle verwendbar ist. Dabei können die Anschlagfläche und die Gegenanschlagfläche mittels hydraulischer oder pneumatischer Hilfsmittel miteinander in Eingriff bringbar sein. Hierbei ist von Vorteil, daß das Lager in Abhängigkeit von den Besonderheiten des jeweiligen Anwendungsfalles verwendet werden kann. Für die Funktion des Lagers ist es im wesentlichen unerheblich, ob die Gegenanschlagfläche dem Auflager oder dem Traglager zugeordnet ist.

Die Mittel können zumindest eine Kolben- Zylindereinheit umfassen, die in dem Auflager und/oder der Stützplatte vorgesehen ist. Dabei kann die Kolben-Zylindereinheit eine Bewegungsachse aufweisen, die sich parallel zu der Achse des Motorlagers erstreckt. Vorteilhafter Weise besteht die Kolben-Zylindereinheit aus drei Zylindern, die hydraulisch betätigbar sind und gleichmäßig entlang einer Umfangslinie eines der Federelemente angeordnet sind. Ermittelt beispielsweise ein Wegaufnehmer Auslenkungen zwischen Traglager und Auflager, die einen bestimmten Schwellwert überschreiten, werden die Zylinder durch ein Signal betätigt und eines der Federelemente arretiert. Der Schwellwert kann beispielsweise in einem Kennfeld gespeichert oder in eine elektronische Motorsteuerung integriert sein, die signalleitend mit dem Wegaufnehmer verbunden ist. Eine hydraulische Betätigung der Zylinder bietet sich durch das im Motor ohnehin vorhandene Öl und eine hohe Betriebssicherheit des federratenumschaltbaren Motorlagers an. Drei Hydraulikzylinder, die gleichmäßig am Umfang eines der Federelemente angeordnet sind, ergeben eine gleichmäßige Belastung des arretierten Federelementes und verhindern darüberhinaus ein Verkanten der Federelemente im Gehäuse bei Betätigung des Hilfsmittels.

Bei einer alternativen Ausführungsform des erfindungsgemäßen Motorlagers kann das Hilfsmittel in das zweite Federelement integriert und dadurch gebildet sein, daß das zweite Federelement einen druckbeaufschlagbaren Hohlraum enthält und durch Einspeisung eines druckbeaufschlagten, strömungsfähigen Mediums in den Hohlraum ausdehnbar ist. Das zweite Federelement kann durch Einspeisung des druckbeaufschlagten Mediums in den Hohlraum parallel zu der Achse dehnbar sein, wobei das zweite Federelement im nichtdruckbeaufschlagten Zustand von der Anschlagfläche der Stützplatte einen radialen Abstand aufweist und erst durch eine radiale Ausdehnung unverrückbar mit der Anschlagfläche in Eingriff bringbar ist. Bei dem druckbeaufschlagbaren Medium kann es sich beispielsweise um Öl handeln. Zum Dämpfen von Schwingungen mit großen Amplituden wird so viel Öl in den Hohlraum eingebracht, daß sich der Innendruck erhöht, daß sich die Wandung in radialer Richtung ausbaucht und gegen die Stützplatte, die vom ersten Federelement umschlossen sein kann, abstützt. Die Gesamtfedercharakteristik wird dadurch härter und dämpft die großen Schwingungsamplituden. Zur Isolierung hochfrequenter Schwingungen ist es dagegen lediglich nötig, beispielsweise über ein Hydraulikventil, den relativen Überdruck aus dem Hohlraum entweichen zu lassen, um so für eine ausgezeichnete Schwingungsisolierung zu sorgen. Die Zuleitung des fließfähigen Mediums in den Hohlraum eines der Federelemente kann durch ein Befestigungselement gebildet sein, das eine Durchgangsbohrung zur Einspeisung des Mediums aufweist.

Gemäß einer weiteren, vorteilhaften Ausgestaltung, ist es vorgesehen, daß das Hilfsmittel durch einen selbstrückstellenden, elastischen Balg gebildet ist, der durch Einspeisung eines strömungsfähigen Mediums in einen umschlossenen Hohlraum ausdehnbar und an der Stützplatte festlegbar ist. Durch den selbstrückstellenden, elastischen Balg ist gewährleistet, daß die Federrate des Motorlagers innerhalb kürzester Zeit umschaltbar sind. Druckbeaufschlagbar ist der elastische Balg beispielsweise durch eine Öffnung im angrenzenden Trag- oder Auflager.

Die Stützplatte kann aus Blech bestehen. Die Herstellung von vorteilhaften Formen, beispielsweise durch Tiefziehen, kann besonders einfach und kostengünstig vorgenommen werden. Darüberhinaus kann vorgesehen sein, daß die Stützplatte von zumindest einem Federelement vollständig umschlossen ist. Durch die vollständige Ummantelung der Stützplatte ergibt sich bei Betätigung des Hilfsmittels eine weiche und geräuschfreie Berührung von Anschlagfläche und Gegenanschlagfläche. Die Stützplatte kann beispielsweise in eines der Federelemente einvulkanisiert sein.

Gemäß einer vorteilhaften Ausgestaltung ist vorgesehen, daß die beiden Federelemente das Traglager und das Auflager zumindest teilweise einander übergreifend verbinden. In einer bevorzugten Ausführungsform ist das erste Federelement ringförmig gestaltet und weist einen Innendurchmesser auf, der größer ist, als der Außendurchmesser des zweiten Federelementes. Neben einer ringförmigen Gestalt des ersten Federelementes besteht auch die Möglichkeit, das erste Federelement aus säulenartigen Gummielementen zu bilden. Dadurch, daß die Federelemente zumindest teilweise einander übergreifend angeordnet sein können, ergeben sich geringe Abmessungen des federratenumschaltbaren Motorlagers in axialer Richtung.

Das erste und das zweite Federelement können an sich quer zu der Achse erstreckenden Haftflächen der Stützplatte und/oder des Trag- und Auflagers festgelegt sein. Hierbei ist von Vorteil, daß während der bestimmungsgemäßen Verwendung des Motorlagers innerhalb der Federelemente überwiegend Druck- und Zugspannungen auftreten und nicht Schubspannungen die die Gebrauchsdauer des Lagers vermindern könnten.

Der Gegenstand der Erfindung wird nachfolgend anhand der in der Anlage beigefügten Zeichnungen weiter verdeutlicht.

Es zeigen jeweils in geschnittener Darstellung:
Fig. 1 ein Motorlager bestehend aus einem Traglager und einem Auflager, die durch zwei Federelemente, die einstückig aneinander festgelegt sind, verbunden sind und drei Zylindern, die dem Traglager zugeordnet sind;
Fig. 2 ein Motorlager, ebenfalls bestehend aus einem Traglager und einem Auflager, die durch zwei einstückig ausgebildete Federelemente verbunden sind und einen im zweiten Federelement angeordneten Hohlraum;
Fig. 3 unterscheidet sich von Fig. 2 durch einen Kolben, der durch einen Stellmotor in den Hohlraum einbringbar ist;
Fig. 4 ein Motorlager mit einer zusätzlichen Fluidkammer zur inneren Verspannung des Lagers und weiteren Verhärtung der Federcharakteristik;
Fig. 5 ein Motorlager mit einem selbstrückstellenden, elastischen Balg;
Fig. 6 ein Lager gemäß Fig. 5, jedoch mit geringeren Abmessungen in radialer Richtung;
Fig. 7 ein Motorlager, bei dem das erste und das zweite Federelement nahezu die gleichen Abmessungen in radialer Richtung aufweisen;
Fig. 8 ein Motorlager mit selbstrückstellendem, elastischem Balg, der an das angrenzende Federelement anlegbar ist, wodurch dieses nicht mit dem druckbeaufschlagbaren Medium in Berührung kommt.

Das in Fig. 1 dargestellte Motorlager besteht im wesentlichen aus einem Traglager 3 und einem Auflager 4, die durch zwei Federelemente 1, 2, die einstückig aneinander festgelegt sind, miteinander verbunden sind. Das erste Federelement 1 umschließt das zweite Federelement 2 zumindest teilweise koaxial mit radialem Abstand. Im Hinblick auf eine größere Stabilität und eine längere Gebrauchsdauer sind die Federelemente 1, 2 beispielsweise durch eine topfförmige, formbeständige Stützplatte 7 aneinander festgelegt. Die topfförmige Gestalt ermöglicht kompakte Abmessungen in axialer Richtung. Die Stützplatte 7 ist von den Federelementen 1, 2 vollständig umschlossen, wodurch eine weiche und geräuschfreie Berührung mit drei hydraulisch betätigbaren Zylindern 8.1 und den Gegenanschlagflächen 4.1 erfolgt. Außerdem schützten die Gegenanschlagflächen 4.1 das Innere des Lagers, insbesondere das zweite Federelement 2 vor Verunreinigungen, die sich außerhalb des Lagers befinden, wodurch das Lager eine sehr hohe Gebrauchsdauer aufweist. Die Zylinder 8.1 sind gleichmäßig auf einer konzentrischen Kreisbahn zu den Federelementen 1, 2 angeordnet. Die beiden weiteren Zylinder sind in dieser Darstellung nicht zu sehen. Die Zylinder können nicht nur wie hier dargestellt, im Auflager 4 angeordnet sein, sondern auch im Traglager 3.

In der gezeigten Darstellung befindet sich das federraten umschaltbare Motorlager in nicht belastetem Zustand; die Anschlagfläche 7.1 liegt an der Gegenanschlagfläche 4.1 an. Im eingebauten Zustand, unter statischer Last, befindet sich die Anschlagfläche 7.1 der Federelemente 1, 2 ungefähr in der Mitte des durch das Auflager 4 und die Gegenanschlagfläche 4.1 begrenzten, ringförmigen Raumes. Zur Schwingungsdämpfung kleiner Amplituden sind die Federelemente 1, 2 in Reihen geschaltet, wodurch sich eine relativ weiche Gesamtfedercharakteristik ergibt. Beim Befahren von schlechten Straßen beispielsweise werden die Zylinder 8.1 betätigt und blockieren den Federweg des zweiten Federelementes 2, indem sie die Anschlagfläche 7.1 auf die Gegenanschlagfläche 4.1 drücken. Die im Vergleich zur Gesamtfedercharakteristik härtere Einzelfedercharakteristik des ersten Federelementes 1 dämpft dann die großen Schwingungsamplituden wirkungsvoll.

Die Fig. 2, 3 und 4 stellen eine alternative Ausführungsform des in Fig. 1 gezeigten Lagers dar. Das Funktionsprinzip ist jeweils ähnlich dem zuvor beschriebenen und beruht im wesentlichen auf dem Abkoppeln eines Federelementes - hier dem zweiten - beim Auftreten großer Schwingungsamplituden, um diese mit einer härteren Federcharakteristik zu dämpfen.

Das Motorlager in Fig. 2 besteht ebenfalls aus einem Traglager 3 und einem Auflager 4, die durch zwei einstückig ausgebildete Federelemente 1, 2 verbunden sind. Beim Befahren ebener Straßen werden die, im wesentlichen vom Motor erzeugten, vergleichsweise hochfrequenten Schwingungen mit kleinen Amplituden vom erfindungsgemäßen Lager, so wie es in der Zeichnung dargestellt ist, sehr gut isoliert. Große Schwingungsamplituden, wie sie beispielsweise beim Überfahren von Bordsteinkaten auftreten, werden in der Weise gedämpft, daß beispielsweise durch das Motorenaufnahmeelement 5, das gleichzeitig als Zuleitung 6 für das fließfähige Medium 9 ausgebildet ist, der Hohlraum 11 so lange mit Medium druckbeaufschlagt wird, bis sich die elastische Umfangswand des den Hohlraum 11 bildenden zweiten Federelementes 2 an der radial mit Abstand benachbarten Wand 10 des ersten Federelementes 1 anlegt. Diese Wand 10 ist zur Versteifung durch einen Einsatz armiert, der beispielsweise aus einem Blech bestehen kann und direkt an die Stützplatte 7 angeformt ist. Die Druckbeaufschlagung bewirkt eine deutliche Verhärtung der Federcharakteristik des Motorlagers sowohl in radialer, als auch in axialer Richtung.

Fig. 3 zeigt ein Motorlager, bei dem die Wirkung des zweiten Federelementes 2 durch einen Kolben 14, der durch einen Stellmotor 13 in den Hohlraum 11 einbringbar ist, unterbunden wird. Beim Befahren ebener Straßen werden die auftretenden kleinen Schwingungsamplituden wie bei dem Motorlager von Fig. 2 ausgezeichnet isoliert. Große Schwingungsamplituden werden gedämpft, indem der Stellmotor 13 ein Signal erhält, daß die Relativbewegung zwischen Traglager 3 und Auflager 4 zu groß ist und den Kolben 14 betätigt. Durch die Inkompressibilität des fließfähigen Mediums 9 wölbt sich die Umfangswand des Hohlraums 11 bei betätigtem Kolben 14 nach außen aus, bis sie, wie auch in Fig. 2, am ersten Federelement 1 anliegt. Nun weist die Federcharakteristik des Lagers eine höhere Steifigkeit auf und niedrigfrequente Schwingungen werden gedämpft.

Fig. 4 zeigt ein Motorlager mit zusätzlicher Fluidkammer 12, die durch eine elastische Trennwand 15 und das Traglager 3 begrenzt ist. Das Motorenaufnahmeelement 5 und das Befestigungselement 16 des Lagers sind als Zuleitungen 6, 17 zum angrenzenden Hohlraum 11 und der angrenzenden Fluidkammer 12 vorgesehen. Die Isolierung höher frequenter Schwingungen erfolgt, wie unter den Fig. 1 bis 3 beschrieben. Große Schwingungsamplituden können bei diesem Lager zweistufig gedämpft werden. Bei Druckbeaufschlagung des Hohlraums 11 verhält sich das Lager wie in der Beschreibung zu Fig. 2 und 3. Reicht die Federsteifigkeit des ersten Federelementes 1 bei Blockierung des zweiten Federelementes 2 nicht aus, kann die zusätzliche Fluidkammer 12 druckbeaufschlagt werden. Dann bewegt sich die elastische Trennwand 15 axial in Richtung des benachbarten Deckels 18, der dem Hohlraum 11 zugeordnet ist und stützt sich gegen diesen ab. Dadurch wird eine weitere Verhärtung der Federcharakteristik in Verbindung mit einer besseren Dämpfung der großen Auslenkbewegungen sowohl in radialer als auch in axialer Richtung bewirkt.

Für eine einwandfreie Funktion der Federraten umschaltbaren Motorlager gemäß der Fig. 1 bis 4 muß eine Be- und Entlüftung 19 im Bereich des fluidungefüllten Raumes vorgesehen sein, beispielsweise in Form einer Bohrung .

Fig. 5 zeigt ein Motorlager, dessen zweites Federelement 2 durch ein Hilfsmittel, das durch einen selbstrückstellenden elastischen Balg 20 gebildet ist, bei Druckbeaufschlagung des Balges blockierbar ist. Durch Einspeisung eines strömungsfähigen Mediums 9 in den von dem Balg 20 umschlossenen Hohlraum 11 dehnt sich der Balg 20 aus und legt die Stützplatte 7 mit ihrer Anschlagfläche 7.1 unverrückbar an der Gegenanschlagfläche 4.1 des Auflagers 4 an. Auf das in dieser Figur dargestellte Motorlager wirkt eine statische Last, wobei das zweite Federelement 2 nicht arretiert, sondern in Reihe zu dem ersten Federelement 1 geschaltet ist. Daraus ergibt sich eine vergleichsweise weiche Gesamtfedercharakteristik des Motorlager. Der Hohlraum 11 im elastischen Balg 20 wird bedarfsweise über die Öffnung 21 mit fließfähigem Medium 9 befüllt. Zur Begrenzung der Ausschläge des ersten Federelementes in axialer Richtung sind Anschlagpuffer 22 vorgesehen, die kreisringförmig gestaltet sein können oder gleichmäßig am Umfang verteilt sind. Neben geringeren mechanischen Belastungen auf das erste Federelement 1 bewirken die Anschlagpuffer 22 auch eine Verringerung des Geräusches während der bestimmungsgemäßen Verwedung des Motorlagers.

Die Fig. 6, 7 und 8 sind im unbelasteten Zustand dargestellt, wobei sich die Anschlagflächen 7.1 der Stützplatte 7 an der Gegenanschlagfläche 4.1 des Auflagers 4 abstützen, ohne daß die Hohlräume 11 mit Druck beaufschlagt sind.

In Fig. 6 ist ein Lager dargestellt, das ähnlich wie das Lager aus Fig. 5 gestaltet ist, aber aufgrund der unterschiedlichen geometrischen Abmessungen der beiden Federelemente 1, 2 geringere Abmessungen in radialer Richtung aufweist.

Das steuerbare Motorlager aus Fig. 7 weist ebenfalls vergleichsweise geringe Abmessungen in radialer Richtung auf. Das erste Federelement 1 und das zweite Federelement 2 sind an einer geradlinigen Stützplatte 7 festgelegt. Das Befestigungselement 16 ist mit einer Zuleitung 17 versehen durch die ein fließfähiges Medium in den an das Auflager angrenzenden Hohlraum 11 gelangen kann. Nach einer anderen, hier nicht dargestellten Ausgestaltung, kann es vorgesehen sein, daß im Befestigungselement ein in axialer Richtung beweglicher Kolben angeordnet ist, der das zweite Federelement 2 bedarfsweise dadurch blockiert, daß er die Anschlagfläche 7.1 der Stützplatte 7 unverrückbar an der Gegenanschlagfläche 4.1. des Auflagers 4 festlegt.

In Fig. 8 ist ein steuerbares Motorlager ähnlich dem Lager aus Fig. 7 dargestellt, wobei das zweite Federelement 2 nicht mit fließfähigem Medium 9 in Berührung kommt. Diese Ausgestaltung ist insbesondere dann sinnvoll, wenn es sich bei dem fließfähigen Medium um eine aggressive Flüssigkeit handelt, die das zweite Federelement zwei angreift und dadurch die Gebrauchsdauer des Lagers herabsetzt. Bei dem Balg 20 aus Fig. 8 handelt es sich wie auch bei den Bälgen in den Fig. 5 und 6 um ein selbstrückstellendes Element, das die Federeigenschaften des Motorlagers bei nicht-druckbeaufschlagtem Hohlraum nicht beeinflußt. Auch in diesem Fall ist das Befestigungselement 16 mit einer Zuleitung 17 versehen, durch die das fließfähige Medium 9 in den Hohlraum 11 eingespeist werden kann. Alternativ dazu wäre auch eine Zuleitung durch das Auflager 3 denkbar, wie beispielsweise in Fig. 5 dargestellt.

Die Motorlager nach den Fig. 1 bis 8 weisen ausgezeichnete Gebrauchseigenschaften bei geringen Abmessungen und wenig Gewicht auf und zeichnen sich durch sehr gute Gebrauchseigenschaften sowie wirtschaftliche Herstellbarkeit aus.

## Patentansprüche (Patentansprüche für folgende(n) Vertragsstaat(en): DE, ES, FR, GB, IT)

1. Federratenumschaltbares Motorlager, bestehend aus einem Traglager (3) und einem Auflager (4), die quer zu einer Achse (22) relativ beweglich angeordnet und durch ein erstes und ein zweites Federelement (1, 2) aus Gummi aufeinander abgestützt sind, wobei das zweite Federelement (2) durch ein Hilfsmittel bedarfsweise blockierbar ist und wobei das erste (1) und das zweite Federelement (2) in Serie geschaltet und durch eine formbeständige Stützplatte (7) voneinander getrennt sind, dadurch gekennzeichnet, daß die Stützplatte (7) eine Anschlagfläche (7.1) aufweist, daß die Anschlagfläche (7.1) mit einer Gegenanschlagfläche (4.1) des Auflagers (4) durch das Hilfsmittel in Eingriff bringbar ist, und daß die Stützplatte (7) aus Blech besteht.

2. Motorlager nach Anspruch 1, dadurch gekennzeichnet, daß das die Anschlagfläche (7.1) und die Gegenanschlagfläche (4.1) mittels hydraulischer oder pneumatischer Hilfsmittel miteinander in Eingriff bringbar sind.

3. Motorlager nach Anspruch 2, dadurch gekennzeichnet, daß die Hilfsmittel zumindest eine Kolben- Zylindereinheit (8.1) umfassen, die in dem Auflager (4) und/oder der Stützplatte (7) vorgesehen ist.

4. Motorlager nach Anspruch 3, dadurch gekennzeichnet, daß die Kolben-Zylindereinheit (8.1) eine Bewegungsachse aufweist, die sich parallel zu der Achse (22) des Motorlagers erstreckt.

5. Motorlager nach Anspruch 2, dadurch gekennzeichnet, daß das Hilfsmittel in das zweite Federelement (2) integriert und dadurch gebildet ist, daß das zweite Federelement (2) einen druckbeaufschlagbaren Hohlraum (11) enthält und durch Einspeisung eines druckbeaufschlagten, strömungsfähigen Mediums (9) in den Hohlraum (11) ausdehnbar ist.

6. Motorlager nach Anspruch 5, dadurch gekennzeichnet, daß das zweite Federelement (2) durch Einspeisung eines druckbeaufschlagten Mediums (9) in den Hohlraum (11) parallel zu der Achse (22) dehnbar ist.

7. Motorlager nach Anspruch 5 bis 6, dadurch gekennzeichnet, daß das zweite Federelement (2) von der Anschlagfläche (7.1) einen radialen Abstand aufweist und durch eine radiale Ausdehnung unverrückbar mit der Anschlagfläche (7.1) in Eingriff bringbar ist.

8. Motorlager nach Anspruch 2, dadurch gekennzeichnet, daß das Hilfsmittel durch einen selbstrückstellenden, elastischen Balg (20) gebildet ist, der durch Einspeisung eines strömungsfähigen Mediums (9) in einen umschlossenen Hohlraum (11) ausdehnbar und an der Stützplatte (7) festlegbar ist.

9. Motorlager nach Anspruch 1 bis 8, dadurch gekennzeichnet, daß die beiden Federelemente (1, 2) das Traglager (3) und das Auflager (4) zumindest teilweise einander übergreifend verbinden.

10. Motorlager nach Anspruch 1 bis 9, dadurch gekennzeichnet, daß das erste (1) und das zweite Federelement (2) an sich quer zu der Achse (22) erstreckenden Haftflächen der Stützplatte (7) und/oder des Trag-(3) und Auflagers (4) festgelegt sind.

## Patentansprüche (Patentansprüche für folgende(n) Vertragsstaat(en): SE)

1. Federratenumschaltbares Motorlager, bestehend aus einem Traglager (3) und einem Auflager (4), die quer zu einer Achse (22) relativ beweglich angeordnet und durch ein erstes (1) und ein zweites Federelement (2) aus Gummi aufeinander abgestützt sind, wobei das zweite Federelement (2) durch ein Hilfsmittel bedarfsweise blockierbar ist und wobei das erste (1) und das zweite Federelement (2) in Serie geschaltet und durch eine formbeständige Stützplatte (7) voneinander getrennt sind, dadurch gekennzeichnet, daß die Stützplatte (7) eine Anschlagfläche (7.1) aufweist und daß die Anschlagfläche (7.1) mit einer Gegenanschlägfläche (4.1) des Auflagers (4) durch das Hilfsmittel in Eingriff bringbar ist.

2. Motorlager nach Anspruch 1, dadurch gekennzeichnet, daß das die Anschlagfläche (7.1) und die Gegenanschlagfläche (4.1) mittels hydraulischer oder pneumatischer Hilfsmittel miteinander in Eingriff bringbar sind.

3. Motorlager nach Anspruch 2, dadurch gekennzeichnet, daß die Hilfsmittel zumindest eine Kolben- Zylindereinheit (8.1) umfassen, die in dem Auflager (4) und/oder der Stützplatte (7) vorgesehen ist.

4. Motorlager nach Anspruch 3, dadurch gekennzeichnet, daß die Kolben-Zylindereinheit (8.1) eine Bewegungsachse aufweist, die sich parallel zu der Achse (22) des Motorlagers erstreckt.

5. Motorlager nach Anspruch 2, dadurch gekennzeichnet, daß das Hilfsmittel in das zweite Federelement (2) integriert und dadurch gebildet ist, daß das zweite Federelement (2) einen druckbeaufschlagbaren Hohlraum (11) enthält und durch Einspeisung eines druckbeaufschlagten, strömungsfähigen Mediums (9) in den Hohlraum (11) ausdehnbar ist.

6. Motorlager nach Anspruch 5, dadurch gekennzeichnet, daß das zweite Federelement (2) durch Einspeisung eines druckbeaufschlagten Mediums (9) in den Hohlraum (11) parallel zu der Achse (22) dehnbar ist.

7. Motorlager nach Anspruch 5 bis 6, dadurch gekennzeichnet, daß das zweite Federelement (2) von der Anschlagfläche (7.1) einen radialen Abstand aufweist und durch eine radiale Ausdehnung unverrückbar mit der Anschlagfläche (7.1) in Eingriff bringbar ist.

8. Motorlager nach Anspruch 2, dadurch gekennzeichnet, daß das Hilfsmittel durch einen selbstrückstellenden, elastischen Balg (20) gebildet ist, der durch Einspeisung eines strömungsfähigen Mediums (9) in einen umschlossenen Hohlraum (11) ausdehnbar und an der Stützplatte (7) festlegbar ist.

9. Motorlager nach Anspruch 1 bis 8, dadurch gekennzeichnet, daß die Stützplatte (7) aus Blech besteht.

10. Motorlager nach Anspruch 1 bis 9, dadurch gekennzeichnet, daß die beiden Federelemente (1, 2) das Traglager (3) und das Auflager (4) zumindest teilweise einander übergreifend verbinden.

11. Motorlager nach Anspruch 1 bis 10, dadurch gekennzeichnet, daß das erste (1) und das zweite Federelement (2) an sich quer zu der Achse (22) erstreckenden Haftflächen der Stützplatte (7) und/oder des Trag-(3) und Auflagers (4) festgelegt sind.

## Claims (Claims for the following Contracting State(s): DE, ES, FR, GB, IT)

1. An engine mount with adjustable spring rate, comprising a bearing support (3) and a support (4) which are arranged in a manner which allows them to execute a relative motion transversely to an axis (22) and are supported on one another by a first and a second spring element (1, 2) made of rubber, the second spring element (2) being lockable, if required, by auxiliary means and the first (1) and the second spring element (2) being arranged in series and separated from one another by a dimensionally stable supporting plate (7), characterized in that the supporting plate (7) has a stop surface (7.1), in that the stop surface (7.1) can be brought into engagement by the auxiliary means with a counter stop surface (4.1) of the support (4) and in that the supporting plate (7) is composed of sheet metal.

2. An engine mount according to claim 1, characterized in that the stop surface (7.1) and the counter stop surface (4.1) can be brought into engagement with one another by means of hydraulic or pneumatic auxiliary means.

3. An engine mount according to claim 2, characterized in that the auxiliary means comprise at least one piston-cylinder unit (8.1), which is provided in the support (4) and/or the supporting plate (7).

4. An engine mount according to claim 3, characterized in that the piston-cylinder unit (8.1) has an axis of motion which extends parallel to the axis (22) of the engine mount.

5. An engine mount according to claim 2, characterized in that the auxiliary means is integrated into the second spring element (2) and is formed in that the second spring element (2) contains a pressurizable cavity (11) and can be expanded by feeding in a pressurized fluid medium (9) into the cavity (11).

6. An engine mount according to claim 5, characterized in that the second spring element (2) can be expanded parallel to the axis (22) by feeding a pressurized medium (9) into the cavity (11).

7. An engine mount according to either of claims 5 and 6, characterized in that the second spring element (2) is at a radial distance from the stop surface (7.1) and can be brought immovably into engagement with the stop surface (7.1) by a radial expansion.

8. An engine mount according to claim 2, characterized in that the auxiliary means is formed by a self-resetting flexible bellows (20) which can be expanded by feeding a fluid medium (9) into an enclosed cavity (11) and can be fixed on the supporting plate (7).

9. An engine mount according to any of claims 1 to 8, characterized in that the two spring elements (1, 2) connect the bearing support (3) and the support (4) with an at least partial overlap.

10. An engine mount according to any of claims 1 to 9, characterized in that the first (1) and the second spring element (2) are fixed on adhesive surfaces of the supporting plate (7) and/or of the bearing support (3) and the support (4), the said surfaces extending transversely to the axis (22).

## Claims (Claims for the following Contracting State(s): SE)

1. An engine mount with adjustable spring rate, comprising a bearing support (3) and a support (4) which are arranged in a manner which allows them to execute a relative motion transversely to an axis (22) and are supported on one another by a first (1) and a second spring element (2) made of rubber, the second spring element (2) being lockable, if required, by auxiliary means and the first (1) and the second spring element (2) being arranged in series and separated from one another by a dimensionally stable supporting plate (7), characterized in that the supporting plate (7) has a stop surface (7.1), in that the stop surface (7.1) can be brought into engagement by the auxiliary means with a counter stop surface (4.1) of the support (4).

2. An engine mount according to claim 1, characterized in that the stop surface (7.1) and the counter stop surface (4.1) can be brought into engagement with one another by means of hydraulic or pneumatic auxiliary means.

3. An engine mount according to claim 2, characterized in that the auxiliary means comprise at least one piston-cylinder unit (8.1), which is provided in the support (4) and/or the supporting plate (7).

4. An engine mount according to claim 3, characterized in that the piston-cylinder unit (8.1) has an axis of motion which extends parallel to the axis (22) of the engine mount.

5. An engine mount according to claim 2, characterized in that the auxiliary means is integrated into the second spring element (2) and is formed in that the second spring element (2) contains a pressurizable cavity (11) and can be expanded by feeding in a pressurized fluid medium (9) into the cavity (11).

6. An engine mount according to claim 5, characterized in that the second spring element (2) can be expanded parallel to the axis (22) by feeding a pressurized medium (9) into the cavity (11).

7. An engine mount according to either of claims 5 and 6, characterized in that the second spring element (2) is at a radial distance from the stop surface (7.1) and can be brought immovably into engagement with the stop surface (7.1) by a radial expansion.

8. An engine mount according to claim 2, characterized in that the auxiliary means is formed by a self-resetting flexible bellows (20) which can be expanded by feeding a fluid medium (9) into an enclosed cavity (11) and can be fixed on the supporting plate (7).

9. An engine mount according to any of claims 1 to 8, characterized in that the supporting plate (7) is composed of sheet metal.

10. An engine mount according to any of claims 1 to 9, characterized in that the two spring elements (1, 2) connect the bearing support (3) and the support (4) with an at least partial overlap.

11. An engine mount according to any of claims 1 to 10, characterized in that the first (1) and the second spring element (2) are fixed on adhesive surfaces of the supporting plate (7) and/or of the bearing support (3) and the support (4), the said surfaces extending transversely to the axis (22).

## Revendications (Revendications pour l'(les) Etat(s) contractant(s) suivant(s): DE, ES, FR, GB, IT)

1. Support de moteur à élasticité réglable, se composant d'un organe de support (3) et d'un organe d'appui (4), qui sont disposés de façon à pouvoir se déplacer relativement perpendiculairement à un axe (22) et qui sont soutenus l'un sur l'autre par un premier et un second élément formant ressorts (1, 2) en caoutchouc, le second élément formant ressort (2) pouvant être bloqué si nécessaire par un moyen auxiliaire et le premier (1) et le second élément formant ressorts (2) étant commandés en série et étant séparés l'un de l'autre par une plaque de soutien (7) résistant aux déformations, caractérisé en ce que la plaque de soutien (7) comporte une surface de butée (7.1), en ce que la surface de butée (7.1) peut être amenée en contact, par le moyen auxiliaire, avec une contre-surface de butée (4.1) de l'organe d'appui (4) et en ce que la plaque de soutien (7) se compose de tôle.

2. Support de moteur selon la revendication 1, caractérisé en ce que la surface de butée (7.1) et la contre-surface de butée (4.1) peuvent être amenées mutuellement en contact à l'aide d'un moyen auxiliaire pneumatique ou hydraulique.

3. Support de moteur selon la revendication 2, caractérisé en ce que les moyens auxiliaires comportent au moins une unité à pistons-cylindres (8.1), qui est située dans l'organe d'appui (4) et/ou dans la plaque de soutien (7).

4. Support de moteur selon la revendication 3, caractérisé en ce que l'unité à pistons-cylindres (8.1) comporte un axe de déplacement qui est orienté parallèlement à l'axe (22) du support de moteur.

5. Support de moteur selon la revendication 2, caractérisé en ce que le moyen auxiliaire est intégré dans le second élément formant ressort (2) et est créé par le fait que le second élément formant ressort (2) contient une cavité (11) pouvant être sollicitée en pression et pouvant être dilatée par introduction dans la cavité (11) d'un agent coulant (9) sollicité en pression.

6. Support de moteur selon la revendication 5, caractérisé en ce que le second élément formant ressort (2) est dilatable parallèlement à l'axe (22) par introduction d'un agent (9) sollicité en pression dans la cavité (11).

7. Support de moteur selon les revendications 5 à 6, caractérisé en ce que le second élément formant ressort (2) est espacé radialement de la surface de butée (7.1) et peut être amené en contact de façon irréversible avec la surface de butée (7.1) par une dilatation radiale.

8. Support de moteur selon la revendication 2, caractérisé en ce que le moyen auxiliaire est constitué par un soufflet élastique (20) à rappel automatique, qui peut être dilaté par introduction d'un agent coulant (9) dans une cavité fermée (11) et qui peut être fixé sur la plaque de soutien (7).

9. Support de moteur selon une des revendications 1 à 8, caractérisé en ce que les deux éléments formant ressorts (1, 2) relient l'organe de support (3) et l'organe d'appui (4) avec emboîtement mutuel au moins partiel.

10. Support de moteur selon une des revendications 1 à 9, caractérisé en ce que le premier (1) et le second élément formant ressorts (2) sont fixés sur des surfaces d'adhérence, s'étendant perpendiculairement à l'axe (22), de la plaque de soutien (7) et/ou de l'organe de support (3) et de l'organe d'appui (4).

## Revendications (Revendications pour l'(les) Etat(s) contractant(s) suivant(s): SE)

1. Support de moteur à élasticité réglable, se composant d'un organe de support (3) et d'un organe d'appui (4), qui sont disposés de façon à pouvoir se déplacer relativement perpendiculairement à un axe (22) et qui sont soutenus l'un sur l'autre par un premier et un second élément formant ressorts (1, 2) en caoutchouc, le second élément formant ressort (2) pouvant être bloqué si nécessaire par un moyen auxiliaire et le premier (1) et le second élément formant ressorts (2) étant commandés en série et étant séparés l'un de l'autre par une plaque de soutien (7) résistant aux déformations, caractérisé en ce que la plaque de soutien (7) comporte une surface de butée (7.1) et en ce que la surface de butée (7.1) peut être amenée en contact, par le moyen auxiliaire, avec une contre-surface de butée (4.1) de l'organe d'appui (4).

2. Support de moteur selon la revendication 1, caractérisé en ce que la surface de butée (7.1) et la contre-surface de butée (4.1) peuvent être amenées mutuellement en contact à l'aide d'un moyen auxiliaire pneumatique ou hydraulique.

3. Support de moteur selon la revendication 2, caractérisé en ce que les moyens auxiliaires comportent au moins une unité à pistons-cylindres (8.1), qui est située dans l'organe d'appui (4) et/ou dans la plaque de soutien (7).

4. Support de moteur selon la revendication 3, caractérisé en ce que l'unité à pistons-cylindres (8.1) comporte un axe de déplacement qui est orienté parallèlement à l'axe (22) du support de moteur.

5. Support de moteur selon la revendication 2, caractérisé en ce que le moyen auxiliaire est intégré dans le second élément formant ressort (2) et est créé par le fait que le second élément formant ressort (2) contient une cavité (11) pouvant être sollicitée en pression et pouvant être dilatée par introduction dans la cavité (11) d'un agent coulant (9) sollicité en pression.

6. Support de moteur selon la revendication 5, caractérisé en ce que le second élément formant ressort (2) est dilatable parallèlement à l'axe (22) par introduction d'un agent (9) sollicité en pression dans la cavité (11).

7. Support de moteur selon les revendications 5 à 6, caractérisé en ce que le second élément formant ressort (2) est espacé radialement de la surface de butée (7.1) et peut être amené en contact de façon irréversible avec la surface de butée (7.1) par une dilatation radiale.

8. Support de moteur selon la revendication 2, caractérisé en ce que le moyen auxiliaire est constitué par un soufflet élastique (20) à rappel automatique, qui peut être dilaté par introduction d'un agent coulant (9) dans une cavité fermée (11) et qui peut être fixé sur la plaque de soutien (7).

9. Support de moteur selon une des revendications 1 à 8, caractérisé en ce que la plaque de soutien (7) se compose de tôle.

10. Support de moteur selon une des revendications 1 à 9, caractérisé en ce que les deux éléments formant ressorts (1, 2) relient l'organe de support (3) et l'organe d'appui (4) avec emboîtement mutuel au moins partiel.

11. Support de moteur selon une des revendications 1 à 10, caractérisé en ce que le premier (1) et le second élément formant ressorts (2) sont fixés sur des surfaces d'adhérence, s'étendant perpendiculairement à l'axe (22), de la plaque de soutien (7) et/ou de l'organe de support (3) et de l'organe d'appui (4).
